# EUROPÄISCHE PATENTSCHRIFT

(11) **EP 2 848 715 B1**
(45) Veröffentlichungstag und Bekanntmachung des Hinweises auf die Patenterteilung: **31.10.2018**
(21) Anmeldenummer: 13184275.9
(22) Anmeldetag: 13.09.2013
(51) Int. Cl.: C25D 5/48, C25D 5/02, C25D 5/50, C21D 1/74, C21D 1/18, C21D 1/42, C21D 6/00, C21D 8/00, C21D 8/02, C21D 9/46, C22C 38/28, C22C 38/06, C25D 3/22, C25D 7/06, C22C 38/02, C21D 1/06, C21D 1/34

(54) **VERFAHREN ZUM HERSTELLEN EINES MIT EINEM METALLISCHEN, VOR KORROSION SCHÜTZENDEN ÜBERZUG VERSEHENEN STAHLBAUTEILS**
METHOD FOR PRODUCING A STEEL COMPONENT WITH AN ANTI-CORROSIVE METAL COATING
PROCÉDÉ DE FABRICATION D'UN COMPOSANT EN ACIER REVÊTU D'UNE COIFFE MÉTALLIQUE PROTÉGEANT DE LA CORROSION

(43) Veröffentlichungstag der Anmeldung: 18.03.2015
(73) Patentinhaber: ThyssenKrupp Steel Europe AG, 47166 Duisburg (DE)
(72) Erfinder: Köyer, Maria, 44143 Dortmund (DE); Sikora, Sascha, 44534 Lünen (DE); Banik, Janko, 58762 Altena (DE)
(74) Vertreter: Cohausz & Florack

(56) Entgegenhaltungen:
- EP-A1- 1 439 240
- EP-A1- 2 248 927
- DE-A1-102007 019 196
- DE-B3-102010 056 265
- US-A- 2 315 740
- US-A1- 2012 164 472
- US-A1- 2012 325 377

## Beschreibung

Die Erfindung betrifft ein Verfahren zum Herstellen eines mit einem metallischen, vor Korrosion schützenden Überzug versehenen Stahlbauteils durch Formen eines aus einem warmpresshärtbaren Stahl, vorzugsweise Mangan-Stahl bestehenden Stahlflachproduktes, das vor dem Formen mit einem Zinküberzug versehen wird.

Wenn hier von "Stahlflachprodukten" die Rede ist, so sind damit Stahlbänder, Stahlbleche oder daraus gewonnene Platinen und desgleichen gemeint.

Um die im modernen Karosseriebau geforderte Kombination aus geringem Gewicht, maximaler Festigkeit und Schutzwirkung zu bieten, werden heutzutage in solchen Bereichen der Karosserie, die im Fall eines Crashs besonders hohen Belastungen ausgesetzt sein können, aus hochfesten Stählen warmpressgeformte Bauteile eingesetzt.

Beim Warmpresshärten, auch Warmumformen genannt, werden Stahlplatinen, die von kalt- oder warmgewalztem Stahlband abgeteilt sind, auf eine in der Regel oberhalb der Austenitisierungstemperatur des jeweiligen Stahls liegende Verformungstemperatur erwärmt und im erwärmten Zustand in das Werkzeug einer Umformpresse gelegt. Im Zuge der anschließend durchgeführten Umformung erfährt der Blechzuschnitt bzw. das aus ihm geformte Bauteil durch den Kontakt mit dem kühlen Werkzeug eine schnelle Abkühlung. Die Abkühlraten sind dabei so eingestellt, dass sich im Bauteil Härtegefüge ergibt.

Ein typisches Beispiel für einen für das Warmpresshärten geeigneten Stahl ist unter der Bezeichnung "22MnB5" bekannt und im Stahlschlüssel 2004 unter der Werkstoffnummer 1.5528 zu finden.

Den Vorteilen der bekannten für das Warmpresshärten besonders geeigneten Mangan-Bor-Stähle steht in der Praxis der Nachteil gegenüber, dass manganhaltige Stähle im Allgemeinen unbeständig gegen Nasskorrosion und nur schwer zu passivieren sind. Diese im Vergleich zu niedriger legierten Stählen bei Einwirken erhöhter Chloridionen-Konzentrationen starke Neigung zu lokal zwar begrenzter, jedoch intensiver Korrosion macht die Verwendung von zur Werkstoffgruppe der hochlegierten Stahlbleche gehörenden Stählen gerade im Karosseriebau schwierig. Zudem neigen manganhaltige Stähle zu Flächenkorrosion, wodurch das Spektrum ihrer Verwendbarkeit ebenfalls eingeschränkt wird.

Im Stand der Technik existieren verschiedene Vorschläge, die darauf abzielen, die Wasserstoffaufnahme von manganhaltigen Stählen während des temperierten Zustandes zu reduzieren bzw. auch solche Stähle mit einem metallischen Überzug zu versehen, der den Stahl vor korrosivem Angriff schützt. Dabei werden aktive und passive Korrosionsschutzsysteme unterschieden.

Aktive Korrosionsschutzsysteme werden üblicherweise durch kontinuierliches Aufbringen eines zinkhaltigen Korrosionsschutzüberzuges hergestellt. Passive Korrosionsschutzsysteme werden dagegen typischerweise durch Aufbringen eines aluminiumbasierten Überzuges, der eine gute Barrierewirkung bezüglich korrosiver Angriffe bietet, hergestellt.

Bei bekannten metallischen, zinkhaltigen Korrosionsschutzbeschichtungen gibt es negative und positive Aspekte.

Stahlbleche mit zinkbasierten Korrosionsschutzüberzügen, die einen hohen Zinkanteil im Bereich von typischerweise mindestens 85 Gew.-% und maximal 98 Gew.-% aufweisen und im Schmelztauchprozess auf ein zu beschichtendes Stahlband aufgebracht werden, bieten einen relativ langen aktiven Korrosionsschutz. Unbefriedigend an der Schmelztauchverzinkung sind jedoch unter anderen gewisse Einschränkungen hinsichtlich der Verarbeitung der so beschichteten Stahlplatinen.

Denn bei zu hohen Platinentemperaturen kommt es zu einer Verringerung der Zinkbestandteile; und/oder eine zu lange Erwärmung der zinkbeschichteten Stahlplatine bzw. des daraus geformten Bauteils reduziert die Korrosionsbeständigkeit der Platine bzw. des Stahlbauteils. Darüber hinaus verursachen weitere Bestandteile der Zinkschmelze, bei denen es sich oft um sauerstoffaffine Elemente wie z.B. Aluminium handelt, die Bildung von harten Oxiden an der Oberfläche des zinkbasierten Korrosionsschutzüberzuges. Diese Oxidschicht schützt zwar vor einer Verdampfung des Zinks, ist aber nur bedingt schweißbar. In der Regel wird daher das Stahlbauteil gestrahlt, um die entstandenen Oxide (typischerweise Aluminiumoxide) zu entfernen. Darüber hinaus neigen solche zinkbasierten Beschichtungen aufgrund ihrer niedrigen Schmelztemperatur zur Rissbildung, weshalb sie sich entsprechend beschichtete Stahlflachprodukte nur im kostenintensiven indirekten Warmumformprozess verarbeiten lassen.

Sogenannte "Galvannealed" Stahlbleche, deren Zinküberzug durch eine Wärmebehandlung in eine Zink-Eisen-Legierungsschicht umgewandelt wurde, wurden speziell für den direkten Warmumformprozess zur Erlangung eines aktiven Korrosionsschutzes entwickelt. Eine solche Zink-Eisen-Beschichtung beinhaltet jedoch typischerweise mehr oder weniger weitere Bestandteile oder Verunreinigungen aus der Zinkschmelze. Nachteil dieser Beschichtung ist unter anderem das ebenfalls eingeschränkte Prozessfenster. Zu hohe Temperaturen verbrennen die Zinkbestandteile; und/oder eine zu lange Erwärmung reduziert wiederum die Korrosionsbeständigkeit. Darüber hinaus verursachen die weiteren Bestandteile der Zinkschmelze, bei denen es sich oft um sauerstoffaffine Elemente wie z.B. Aluminium handelt, die Bildung von harten Oxiden an der Oberfläche des Korrosionsschutzüberzuges. In der Regel wird daher das Bauteil gestrahlt, um die entstandenen Oxide (in der Regel Aluminiumoxide) zu entfernen. Eine Gefahr der Rissbildung durch Zink besteht ebenfalls. Ferner kann es aufgrund der bei der Erwärmung durch die sauerstoffaffinen Elemente gebildeten harten Oxide zu einem etwas erhöhten Reibbeiwert kommen.

Die US 2012/0325377 A1 offenbart ein Verfahren zur Herstellung eines pressgehärteten Stahlbauteils mit einer zinkbasierten Beschichtung. Das Verfahren ist dadurch gekennzeichnet, dass ein Stahlblech mit einer Beschichtung auf Zink-Basis einer Wärmebehandlung unterzogen wird, die einen ersten Erwärmungsschritt umfasst, in welchem das beschichtete Stahlblech in einer Sauerstoff enthaltenden Atmosphäre auf einen Temperaturbereich von mindestens 600°C bis max. 750°C erwärmt wird, wobei die durchschnittliche Aufheizgeschwindigkeit bis 600°C höchstens 50°C/s beträgt. Danach folgt ein erster Abkühlungsschritt, in welchem das in dem ersten Erwärmungsschritt erwärmte Stahlblech auf 550°C oder darunter gekühlt wird, wodurch eine Stahlplatine gebildet wird, die auf ihrer Oberfläche eine Zinkoxidschicht als äußerste Schicht und eine darunter liegende Zink-Eisen-Legierungsphase mit einem Fe-Gehalt von mindestens 25 Gew.-% aufweist. Die so behandelte Stahlplatine wird anschließend in einem zweiten Erwärmungsschritt auf eine Temperatur, die mindestens dem AC₃-Punkt des Stahls der Platine entspricht, erwärmt und dann warmumgeformt sowie durch rasche Abkühlung abgeschreckt. Die Wärmebehandlung bei über 600°C entspricht einem "Galvannealing-Prozess".

Die EP 1 439 240 A1 offenbart ein "galvannealed" Stahlblech für die Warmumformung (Pressformung), das eine reine Zinkschicht aufweisen kann, wobei das beschichtete Stahlblech einer speziellen Wärmebehandlung unterworfen wird, die insbesondere ein "Galvannealing" vorsieht. Dieses Behandlungsverfahren zielt auf die Bildung einer Zinkoxidschicht als Barriereschicht ab, mit der Wirkung, dass eine Verdampfung von Zink während der der Warmumformung vorgeschalteten Erwärmung verhindert wird.

Die EP 2 248 927 A1 beschreibt ein Verfahren zur Herstellung von "galvannealed" Stahl mit einer "galvannealed" Beschichtung auf Basis von Zink. Die Beschichtung soll einen Fe-Gehalt von mindestens 15 Gew.-% aufweisen. Bei diesem Verfahren ist ein Abkühlschritt mit einer relativ hohen Abkühlrate von wenigstens 1,5 x 10² °C/Sekunde vorgesehen.

Aluminium-Silizium-Beschichtungen bieten dagegen ein relativ großes Verarbeitungsfenster. Dieser Korrosionsschutzüberzug wird im Feuerbeschichtungsprozess (Schmelztauchprozess) auf das Stahlflachprodukt aufgebracht. Dabei entsteht eine harte intermetallische Phase zwischen dem Stahlsubstrat und der eigentlichen Beschichtung. Aufgrund dieser harten intermetallischen Phase ist eine Kaltumformung eines AlSi-beschichteten Stahlblechs nur eingeschränkt möglich, da die Beschichtung partiell abplatzen wird und an den abgeplatzten Stellen eine ungewollte Oxidation bzw. Randabkohlung auftritt. Daher werden AlSi-beschichtete, presshärtbare Stahlbleche normalerweise nur im direkten Warmumformprozess eingesetzt. Somit sind aber einige Herstellungsverfahren mit dieser Beschichtung nicht möglich. Zudem ist eine AlSi-Beschichtung nur eingeschränkt für schnelle Aufheizprozesse geeignet, da diese zu einer ungewünschten Aufschmelzung führen. Nach herkömmlicher Erwärmung (typischerweise Ofenerwärmung) liegen während des Umformprozesses hohe Reibwerte vor, die teilweise das Umformverhalten negativ beeinflussen.

Allgemein besitzen im Schmelztauchverfahren aufgebrachte metallische Korrosionsschutzüberzüge Nachteile bei nachfolgenden schnellen Erwärmungsverfahren, insbesondere bei einer Erwärmung mittels Laserstrahlung oder Infrarottechnologie. Denn dabei können häufig eine Flüssigphasenbildung und eine dadurch verschlechterte Absorption beobachtet werden. Im Ergebnis können daher in der Regel weder eine homogene Erwärmung noch gleichbleibende Schichteigenschaften erzielt werden.

Davon ausgehend lag der Erfindung die Aufgabe zugrunde, ein in der Praxis einfach durchzuführendes Verfahren anzugeben, das es erlaubt, mit vergleichsweise geringem Aufwand ein Stahlbauteil herzustellen, welches mit einem gut haftenden und vor Korrosion schützenden metallischen Überzug versehen ist. Aufgabe der Erfindung ist es insbesondere, ein Verfahren anzugeben, mit dem sich Stahlflachprodukte vor Korrosion ausreichend schützen lassen und das ein breites Feld an Verarbeitungsvarianten ermöglicht. Dabei steht nicht ein lang anhaltender Korrosionsschutz im Vordergrund, sondern mehr eine hohe Flexibilität der Verarbeitungseigenschaften.

In Bezug auf das Verfahren ist diese Aufgabe gemäß einer ersten Variante der Erfindung dadurch gelöst, dass bei der Herstellung eines Stahlbauteils die in Anspruch 1 angegebenen Verfahrensschritte durchlaufen werden.

Eine alternative, die oben genannte Aufgabe ebenfalls lösende Variante des erfindungsgemäßen Verfahrens ist in Anspruch 2 angegeben.

Die erste Variante des erfindungsgemäßen Verfahrens betrifft das Formen des Stahlbauteils durch sogenanntes "direktes Warmumformen" (direktes Presshärten), während die zweite Verfahrensvariante das Formen des Stahlbauteils im sogenannten "indirekten Verfahren" (indirektes Presshärten) betrifft, bei dem eine erfindungsgemäß beschichtete Stahlplatine zunächst kaltumgeformt, dann auf Austenitisierungstemperatur erwärmt und anschließend durch rasches Abkühlen in den Vergütungs- oder Härtegefügezustand überführt wird.

Vorteilhafte Ausgestaltungen der erfindungsgemäßen Verfahrensvarianten sind in den auf Anspruch 1 oder 2 rückbezogenen Ansprüchen angegeben und nachfolgend erläutert.

Bei einem erfindungsgemäßen Verfahren zum Herstellen eines mit einem metallischen, vor Korrosion schützenden Überzug versehenen Stahlbauteils, wird zunächst ein Stahlflachprodukt, d. h. ein Stahlband oder Stahlblech, zur Verfügung gestellt, das aus einem im Warmumformprozess durch Abschrecken härtbaren Stahlwerkstoff erzeugt ist, der eine Streckgrenze von 150 - 1100 MPa und eine Zugfestigkeit von 300 - 1200 MPa aufweist.

Typischerweise kann es sich bei diesem Stahlwerkstoff um einen hochfesten Mangan-Bor-Stahl in an sich bekannter Zusammensetzung handeln. Dementsprechend kann der erfindungsgemäß verarbeitete Stahl neben Eisen und unvermeidbaren Verunreinigungen (in Gew.-%) 0,2 - 0,5 % C, 0,5 - 3,0 % Mn, 0,002-0,004 % B sowie optional eines oder mehrere Elemente der Gruppe "Si, Cr, Al, Ti" in folgenden Gehalten enthalten: 0,1-0,3 % Si, 0,1-0,5 % Cr, 0,02-0,05 % Al, 0,025-0,04 % Ti.

Bei dem verwendeten Stahlflachprodukt handelt es sich bevorzugt um rekristallisierendes Kaltband, da sich gezeigt hat, dass sich ein solches Stahlband in einer elektrolytischen Beschichtungsanlage vergleichsweise kostengünstig beschichten lässt.

Auf das entsprechend beschaffene und bereitgestellte Stahlflachprodukt wird durch elektrolytisches Beschichten eine sehr gleichmäßig dünne und sehr reine Zinkschicht aufgebracht. Das elektrolytische Beschichten wird dabei in einer Weise ausgeführt, dass die Zinkschicht eine mittlere Schichtdicke kleiner 5 µm, vorzugsweise im Bereich von 1 - 4 µm, besonders bevorzugt im Bereich von 2 - 4 µm aufweist. Die besonders hohe Gleichmäßigkeit der Schichtdicke (d.h. die sehr geringe Dickenvariation über die Substratbreite bzw. -länge) resultiert insbesondere aus der geringen Schichtdicke, da Ungleichmäßigkeiten der Schichtdicke erst bei größeren Schichtdicken verstärkt auftreten. Eine mittlere Schichtdicke kleiner 1 µm sollte nicht eingestellt werden, da es andernfalls zu örtlichen Fehlstellen, d.h. unbeschichteten Stellen auf der Oberfläche des Stahlflachproduktes kommen kann.

Aufgrund der sehr geringen Dicke der Zinkschicht bildet sich bei der nachfolgenden Warmumformung weniger flüssiges Zink, da Eisen (Fe) aus dem Substrat nahe über die gesamte Schichtdicke in die Zinkschicht eindiffundieren und mit dem Zink durchreagieren kann. Somit wird die Zinkschicht im Wesentlichen vollständig in eine Zn-Fe-Legierung umgewandelt.

Die elektrolytisch abgeschiedene dünne Zinkschicht dient insbesondere zum Verzunderungsschutz des Stahlsubstrats sowie zur verbesserten "Schmierung" (aufgrund geringerer Reibung) während der Warmumformung. Es bildet sich auf der Zinkschicht Zinkoxid, das im Unterschied zu Aluminiumoxid, welches sehr spröde ist und schlechte Schmiereigenschaften besitzt, eine wesentlich verbesserte Schmierung bewirkt. Somit werden im tribologischen System die Reibbeiwerte verringert und damit die Umformeigenschaften verbessert.

Die elektrolytische Abscheidung der Zinkschicht wird im Rahmen des erfindungsgemäßen Verfahrens vorzugsweise als kontinuierlicher Bandbeschichtungsprozess ausgeführt.

Die dünne Zinkschicht dient zusätzlich zur Verringerung oder sogar Verhinderung von Rotrostbildung beim Transport eines bereits warmumgeformten Stahlblechs bzw. eines bereits wärmebehandelten Coils.

Eine vorteilhafte Ausgestaltung des erfindungsgemäßen Verfahrens sieht vor, dass das elektrolytische Beschichten in einer Weise ausgeführt wird, dass der Zinküberzug mit unterschiedlicher Schichtdicke je Stahlflachproduktseite aufgebracht wird. Hierdurch lässt sich eine bedarfsgerechte Anpassung der Zinkbeschichtung erzielen.

Eine andere vorteilhafte Ausgestaltung des erfindungsgemäßen Verfahrens sieht vor, dass der Zinküberzug nur auf eine Seite des Stahlflachprodukts aufgebracht wird. Auch diese Variante stellt eine bedarfsgerechte Anpassung der Zinkbeschichtung dar.

Eine weitere vorteilhafte Ausgestaltung des erfindungsgemäßen Verfahrens sieht vor, dass das Erwärmen der Platine oder des Stahlbauteils in einer Ofenatmosphäre durchgeführt wird, die zwischen 5 Vol.-% und 25 Vol.-% Sauerstoff, vorzugsweise zwischen 15 Vol.-% und 22 Vol.-% Sauerstoff enthält. Eine weitere Optimierung zur Reduzierung der Wasserstoffaufnahme ergibt sich, wenn gemäß einer weiteren Ausgestaltung des erfindungsgemäßen Verfahrens das Erwärmen der Platine oder des Stahlbauteils in einer getrocknetes Gas, vorzugsweise getrocknete Luft enthaltenden Ofenatmosphäre durchgeführt wird. Hierdurch wird die Ofenatmosphäre künstlich zu einem niedrigen Taupunkt geführt.

Eine weitere vorteilhafte Ausgestaltung des erfindungsgemäßen Verfahrens ist dadurch gekennzeichnet, dass das Erwärmen der Platine oder des Stahlbauteils eine partiell unterschiedliche Wärmebehandlung der Platine oder des Stahlbauteils umfasst oder ist. Die partielle Wärmebehandlung der Platine oder des Stahlbauteils erfolgt dabei vorzugsweise mittels induktiver oder laserunterstützter Erwärmung. Hierdurch lassen sich beispielsweise Bereiche mit unterschiedlichen Festigkeitseigenschaften an dem herzustellenden Stahlbauteil erzeugen.

Nachfolgend wird die Erfindung anhand von Abbildungen und Beispielen weiter offenbart. Es zeigen:
- Abb. 1: einen Querschliff einer Probe eines elektrolytisch verzinkten Mangan-Bor-Stahlflachproduktes nach einer Glühbehandlung;
- Abb. 2: einen Querschliff einer weiteren Probe eines erfindungsgemäß beschichteten, ungeglühten Mangan-Bor-Stahlflachproduktes, dessen elektrolytisch aufgebrachte Zinkschicht eine mittlere Schichtdicke von 1 µm aufweist;
- Abb. 3: einen Querschliff einer weiteren Probe eines erfindungsgemäß beschichteten, ungeglühten Mangan-Bor-Stahlflachproduktes, dessen elektrolytisch aufgebrachte Zinkschicht eine mittlere Schichtdicke von 3 µm aufweist; und
- Abb. 4: einen Querschliff einer weiteren Probe eines erfindungsgemäß beschichteten, ungeglühten Mangan-Bor-Stahlflachproduktes, dessen elektrolytisch aufgebrachte Zinkschicht eine mittlere Schichtdicke von 5 µm aufweist.

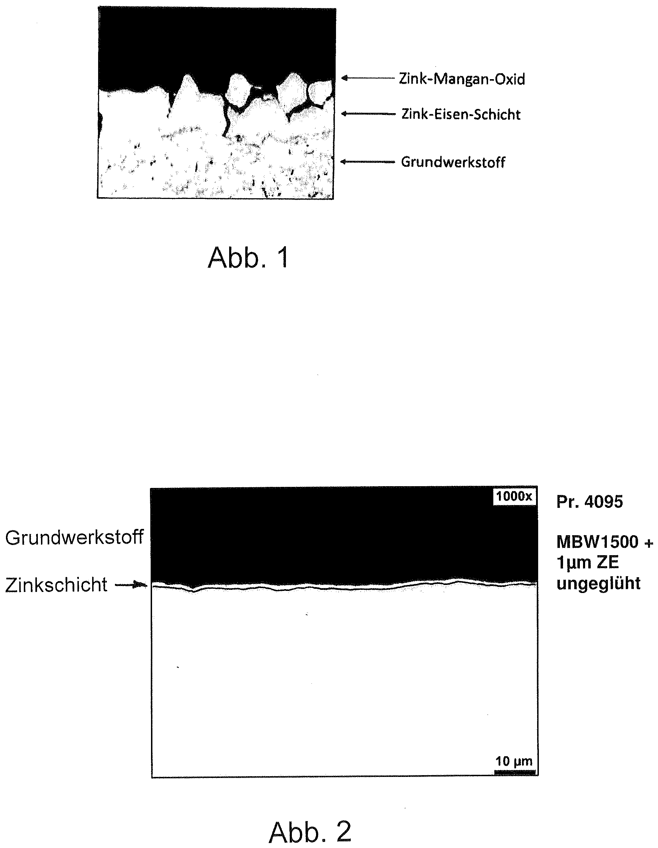

Die Abb. 1 zeigt beispielhaft einen Abschnitt eines elektrolytisch verzinkten Mangan-Bor-Stahlflachproduktes nach einer Glühbehandlung. In die auf dem Grundwerkstoff (Mangan-Bor-Stahl) abgeschiedene Zinkschicht sind durch die Wärmebehandlung Eisen (Fe) und Mangan (Mn) eindiffundiert, wodurch die Zinkschicht in eine Zink-Eisen-Schicht und eine darüber liegende sehr dünne Zink-Mangan-Oxidschicht umgewandelt wurde. Bei Grundwerkstoffen ohne Mangan wird sich auf der Zink-Eisen-Schicht nur eine Zinkoxidschicht ausbilden. Die Zink- bzw. Zink-Mangan-Oxidschicht wird vorzugsweise entfernt, beispielsweise mittels eines Strahlprozesses, um die Lackierbarkeit des aus dem erfindungsgemäß beschichteten Stahlflachproduktes geformten Stahlbauteils zu verbessern.

In den Abbildungen 2 bis 4 sind drei Proben eines erfindungsgemäß beschichteten Mangan-Bor-Stahlblechs im senkrechten Anschliff dargestellt. Das jeweilige Stahlblech ist mit einem dünnen Zinküberzug versehen, der elektrolytisch aufgebracht wurde und eine mittlere Schichtdicke von 1 µm, 3 µm bzw. 5 µm aufweist. Die dargestellten Proben zeigen das elektrolytisch verzinkte Mangan-Bor-Stahlblech im ungeglühten Zustand.

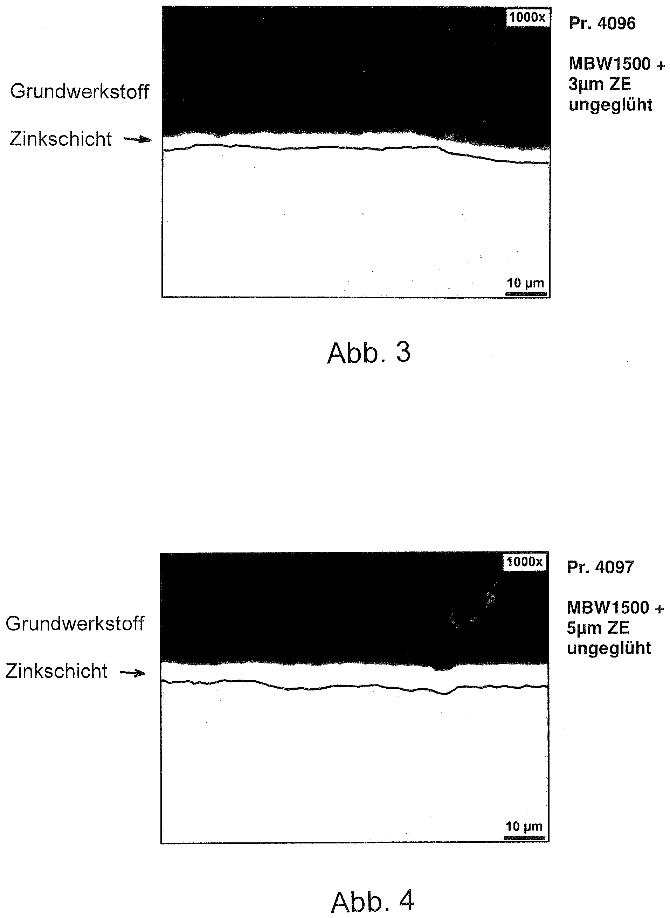

Die lichtmikroskopisch dargestellten Proben lassen erkennen, dass sich bei einer mittleren Zinkschichtdicke von 1 µm örtliche Fehlstellen des Überzugs ergeben haben (siehe Abb. 2), während bei einer mittleren Schichtdicke von 3 µm bereits ein geschlossener, gleichmäßiger Zinküberzug erzielt wurde (siehe Abb. 3). Auch bei einer mittleren Schichtdicke von 5 µm ergibt sich eine gleichmäßige Schichtdickenverteilung des Zinküberzugs (siehe Abb. 4).

Um die erfindungsgemäße geringe mittlere Schichtdicke des Zinküberzuges zu erzielen, werden die Betriebsparameter der elektrolytischen Beschichtung entsprechend eingestellt. Die " Betriebsparameter " der elektrolytischen Beschichtung umfassen beispielsweise die Art der Strömung am zu beschichtenden Substrat, die Strömungsgeschwindigkeit des Elektrolyten, die Ausrichtung der Elektrolytströmung in Bezug auf das jeweils zu beschichtende Stahlsubstrat, die Stromdichte, die Temperatur, den pH-Wert des Elektrolyten und die Verweilzeit bzw. Behandlungsdauer des zu beschichtenden Substrats in der Elektrolysezelle. Erfindungsgemäß sind diese Einflussgrößen so aufeinander abzustimmen, dass sich der Zinküberzug mit der erfindungsgemäß vorgegebenen Schichtdicke einstellt. Dazu können die genannten Parameter in Abhängigkeit von der jeweils zur Verfügung stehenden Anlagentechnik jeweils wie folgt variiert werden:
- Die Art der Strömung am zu beschichtenden Substrat: Laminar oder turbulent; sowohl bei laminarer als auch bei turbulenter Strömung des Elektrolyten am zu beschichtenden Stahlflachprodukt stellen sich gute Beschichtungsergebnisse ein. Bei vielen in der Praxis zur Verfügung stehenden Beschichtungsanlagen wird jedoch aufgrund des intensiveren Austauschs zwischen Elektrolyt und Stahlsubstrat in der Praxis jedoch eine turbulente Strömung bevorzugt werden,
- Strömungsgeschwindigkeit des Elektrolyten: 0,1 - 6 m/s;
- Ausrichtung der Elektrolytströmung in Bezug auf das jeweils zu beschichtende Stahlsubstrat: Die Beschichtung des Stahlsubstrats kann sowohl in vertikal als auch in horizontal ausgerichteten Zellen erfolgen;
- Stromdichte: 10 - 140 A/dm²;
- Temperatur des Elektrolyten: 30 - 70°C;
- pH-Wert des Elektrolyten: 1 - 3,5;
- Durchlaufdauer/ Verweilzeit in der Elektrolytzelle: 1 - 15 min.

Aus dem in erfindungsgemäßer Weise beschichteten Stahlflachprodukt wird dann eine Stahlplatine gebildet. Diese kann in an sich bekannter Weise von dem jeweiligen Stahlband oder Stahlblech abgeteilt werden. Denkbar ist aber auch, dass das Stahlflachprodukt bei der Beschichtung bereits die für die anschließende Formgebung zu dem Bauteil benötigte Form besitzt, also der Platine entspricht. Die so in erfindungsgemäßer Weise mit dem sehr dünnen, im Wesentlichen reinen Zinküberzug versehene Stahlplatine wird gemäß der ersten Variante des erfindungsgemäßen Verfahrens anschließend auf eine nicht weniger als 800 °C betragende Platinentemperatur erwärmt und daraufhin aus der erwärmten Platine das Stahlbauteil geformt. Gemäß der zweiten Verfahrensvariante wird dagegen aus der Platine zunächst das Stahlbauteil zumindest vorgeformt und erst darauf folgend die Erwärmung auf eine mindestens 800 °C betragende Bauteiltemperatur durchgeführt. Im Zuge der Erwärmung auf die Platinen- bzw. Bauteiltemperatur findet in der zuvor aufgebrachten dünnen Zinkschicht eine Umwandlung in eine Zn-Fe-Legierung statt.

Gemäß der ersten Variante des erfindungsgemäßen Verfahrens wird die erfindungsgemäß auf eine Temperatur von mindestens 800 °C erwärmte Platine zu dem Stahlbauteil geformt. Dies kann beispielsweise dadurch erfolgen, dass die Platine im unmittelbaren Anschluss an die Erwärmung zu dem jeweils verwendeten Formwerkzeug gefördert wird. Auf dem Weg zu dem Formwerkzeug kommt es in der Regel unvermeidbar zu einer Abkühlung der Platine, so dass im Fall einer solchen auf die Erwärmung folgenden Warmumformung die Temperatur der Platine bei Eintritt in das Formwerkzeug üblicherweise niedriger liegt als die Platinentemperatur am Ausgang des Ofens. In dem Formwerkzeug wird die Stahlplatine in an sich bekannter Weise zu dem Stahlbauteil umgeformt.

Wird die Formgebung bei für die Bildung von Härte- oder Vergütungsgefüge ausreichend hohen Temperaturen durchgeführt, so lässt sich das erhaltene Stahlbauteil ausgehend von der jeweiligen Temperatur mit einer Abkühlgeschwindigkeit abkühlen, die für die Entstehung von Vergütungs- oder Härtegefüge in seinem Stahlsubstrat ausreicht. Dieser Vorgang lässt sich besonders wirtschaftlich im Warmformwerkzeug selbst durchführen.

Dementsprechend eignet sich das erfindungsgemäße Verfahren aufgrund der Unempfindlichkeit des in erfindungsgemäßer Weise beschichteten Stahlflachproduktes gegen Risse des Stahlsubstrats und Abrieb insbesondere für das einstufige Warmpressformen, bei dem eine Warmformgebung und die Abkühlung des Stahlbauteils unter Ausnutzung der Wärme der zuvor durchgeführten Erwärmung auf die Platinentemperatur in einem Zuge in einem Werkzeug durchgeführt werden.

Bei der zweiten Verfahrensvariante wird zunächst die Platine gebildet und dann ohne zwischengeschaltete Wärmebehandlung aus dieser Platine das Stahlbauteil geformt. Das Formen des Stahlbauteils erfolgt dabei typischerweise in einem Kaltformvorgang, bei dem eine oder mehrere Kaltumformoperationen durchgeführt werden. Der Grad der Kaltformgebung kann dabei so hoch sein, dass das erhaltene Stahlbauteil im Wesentlichen vollständig fertig ausgeformt ist. Jedoch ist es auch denkbar, die erste Formgebung als Vorformen durchzuführen und dem Stahlbauteil nach dem Erwärmen in einem Formwerkzeug fertig zu formen. Dieses Fertigformen kann mit dem Härtevorgang kombiniert werden, indem das Härten als Formhärten in einem geeigneten Formwerkzeug durchgeführt wird. Dabei wird das Stahlbauteil in ein seine fertige Endform abbildendes Werkzeug gelegt und für die Ausbildung des gewünschten Härte- oder Vergütungsgefüges ausreichend schnell abgekühlt. Das Formhärten ermöglicht so eine besonders gute Formhaltigkeit des Stahlbauteils. Die Formänderung während des Formhärtens ist dabei üblicherweise gering.

Unabhängig davon, welche der beiden Varianten des erfindungsgemäßen Verfahrens angewendet werden, müssen weder die Formgebung noch die zur Ausbildung des Härte- oder Vergütungsgefüges benötigte Abkühlung in besonderer, vom Stand der Technik abweichender Weise durchgeführt werden. Vielmehr können bekannte Verfahren und vorhandene Vorrichtungen für diesen Zweck eingesetzt werden. Aufgrund dessen, dass in erfindungsgemäßer Weise ein sehr dünne, relativ gleichmäßige und im Wesentlichen reine Zinkschicht auf dem umzuformenden Stahlflachprodukt erzeugt wird, besteht im Fall einer Warmformgebung oder einem Formen bei erhöhten Temperaturen keine Gefahr, dass es zu einer Erweichung des Zinküberzuges und dementsprechend zu Anhaftungen von Überzugsmaterial an den mit ihm in Kontakt kommenden Flächen des Werkzeugs kommt.

Um ein optimales Ergebnis der elektrolytischen Beschichtung zu gewährleisten, kann das Stahlflachprodukt vor dem elektrolytischen Beschichten in an sich bekannter Weise einer Vorbehandlung unterzogen werden, bei der die Oberfläche des Stahlsubstrats so behandelt wird, dass sie einen für die nachfolgend durchgeführte Beschichtung mit der Korrosionsschutzschicht optimal vorbereitete Oberflächenzustand besitzt. Dazu können ein oder mehrere der nachfolgend aufgezählten Vorbehandlungsschritte durchlaufen werden:
- Alkalische Entfettung des Stahlflachprodukts in einem Entfettungsbad. Typischerweise enthält das Entfettungsbad 5 - 150 g/l, insbesondere 10 - 20 g/l, eines Tensid-Reinigers. Die Temperatur des Entfettungsbades beträgt dabei 20 - 85 °C, wobei sich eine besonders gute Wirksamkeit bei einer Badtemperatur von 65 - 75 °C einstellt. Dies gilt insbesondere dann, wenn die Entfettung elektrolytisch erfolgt, wobei in diesem Fall besonders gute Reinigungsergebnisse erzielt werden, wenn mindestens ein Zyklus anodischer und kathodischer Probenpolung durchlaufen wird. Dabei kann es sich als vorteilhaft erweisen, wenn bei der alkalischen Reinigung nicht nur elektrolytisch tauchentfettet wird, sondern vor der elektrolytischen Reinigung schon eine Spritz-/Bürstreinigung mit dem alkalischen Medium durchgeführt wird.
- Spülen des Stahlflachproduktes, wobei diese Spülung mittels Klarwasser oder vollentsalztem Wasser durchgeführt wird.
- Dekapieren des Stahlflachproduktes. Beim Dekapieren werden die Flachprodukte durch ein Säurebad geleitet, das die Oxidschicht von ihnen abspült, ohne die Oberfläche des Stahlflachprodukts selbst anzugreifen. Durch den gezielt durchgeführten Schritt der Dekapierung wird der Oxidabtrag so gesteuert, dass man eine für die elektrolytische Bandverzinkung günstig eingestellte Oberfläche erhält. Nach dem Dekapieren kann ein erneutes Spülen des Stahlflachproduktes zweckmäßig sein, um Restbestände der beim Dekapieren eingesetzten Säure von dem Stahlflachprodukt zu entfernen.
- Sofern ein Spülen des Stahlflachprodukts durchgeführt wird, kann das Stahlflachprodukt währenddessen mechanisch gebürstet werden, um auch fest sitzende Partikel von seiner Oberfläche zu beseitigen.
- Auf dem vorbehandelten Stahlflachprodukt noch vorhandene Flüssigkeiten werden vor dem Eintritt in das Elektrolytbad üblicherweise mittels Abquetschrollen entfernt.

Als praxisgerechte Beispiele für zu einem besonders guten Ergebnis der elektrolytischen Beschichtung führenden Vorbehandlungen sind folgende Varianten zu nennen:

### Beispiel 1:

Ein geglühtes Kaltband der Güte 22MnB5 (1.5528) wird alkalisch spritzentfettet und zusätzlich elektrolytisch entfettet. Das Entfettungsbad enthält in einer Konzentration von ca. 15 g/l einen handelsüblichen Reiniger, der mehr als 25 % Natriumhydroxid, 1 - 5 % eines Fettalkoholethers und 5 - 10 % eines ethoxylierten, propoxylierten und methylierten C12-18 Alkohols aufweist. Die Badtemperatur beträgt ca. 65 °C. Die Verweildauer in der Spritzentfettung beträgt ca. 4 - 6 s. Daran schließt sich eine Bürstreinigung an. Im weiteren Verlauf wird das Band elektrolytisch entfettet bei einer Verweildauer von ca. 3 s mit anodischer und kathodischer Polung sowie einer Stromdichte von 15 A/dm². Daran schließt sich eine mehrstufige Spüle mit vollentsalztem Wasser bei Raumtemperatur mit Bürsteneinsatz an. Die Verweildauer in der Spüle beträgt ca. 2 - 4 s. Im Folgenden wird eine Salzsäuredekapierung (20 g/l; Temperatur 35 - 38 °C) bei einer Verweilzeit von ca. 10 - 12 s durchlaufen. Nach einer ca. 7 - 9 s dauernden Spüle mit vollentsalztem Wasser wird das Blech nach dem Durchlaufen einer Abquetschvorrichtung in die horizontal ausgerichtete Elektrolysezelle überführt. In dieser erfolgt die erfindungsgemäße Beschichtung des Stahlbands oder -blechs. Hierzu sind folgende Betriebsparameter eingestellt worden:
- Zn-Gehalt des Elektrolyten: 80 - 150 g/l;
- Na2SO4-Gehalt des Elektrolyten: 23 - 28 g/l;
- pH-Wert des Elektrolyten: 1,4 - 1.6;
- Temperatur des Elektrolyten: 60 - 70°C;
- Stromdichte: 10 - 40 A/dm²;
- Strömungsgeschwindigkeit des Elektrolyten: 0,1 - 6 m/s;
- Durchlauf-/Behandlungsdauer in der Elektrolytzelle: 2 - 8 min.

Das aus der elektrolytischen Beschichtungslinie austretende Stahlflachprodukt kann mehrstufig mit Wasser und vollentsalztem Wasser bei Raumtemperatur gespült werden. Im Anschluss durchläuft das Stahlflachprodukt dann noch eine Trocknungsstrecke.

### Beispiel 2:

Warmband (gebeizt) der Güte 22MnB5 (1.5528) wird alkalisch spritzentfettet und elektrolytisch entfettet. Das Entfettungsbad beinhaltet in einer Konzentration von 20 g/l einen Reiniger, der 1 - 5 % C12-18 Fettalkohol-Polyethylenglykol-Butylether und 0,5 - 2 % Kaliumhydroxid enthält. Die Badtemperatur beträgt ca. 75 °C. Die Verweildauer in der horizontalen Spritzspüle beträgt ca. 10 -12 s. Daran schließt sich eine doppelte Bürstreinigung an. Im weiteren Verlauf wird das Band elektrolytisch entfettet bei einer Verweildauer von ca. 8 - 10 s mit anodischer und kathodischer Polung und einer Stromdichte von ca. 10 A/dm². Daran schließt sich eine mehrstufige Spüle mit vollentsalztem Wasser bei Raumtemperatur mit Bürsteneinsatz an. Die Verweildauer beträgt ca. 2 - 4 s. Im Folgenden wird eine Salzsäuredekapierung (100 g/l; Raumtemperatur) bei einer Verweilzeit von ca. 26- 28 s durchlaufen. Nach einer kombinierten Bürst- und Spritzfrischwasserspüle wird das Blech nach dem Durchlaufen einer Abquetschvorrichtung in die horizontal ausgerichtete Elektrolysezelle überführt, in welcher die erfindungsgemäße Abscheidung des Zinküberzuges erfolgt. Hierzu sind folgende Betriebsparameter eingestellt worden:
- Zn-Gehalt des Elektrolyten: 100 - 130 g/l;
- Na2SO4-Gehalt des Elektrolyten: 23 - 27 g/l;
- pH-Wert des Elektrolyten: 1,4 - 1.6;
- Temperatur des Elektrolyten: 60 - 75°C;
- Stromdichte: 20 - 40 A/dm²;
- Strömungsgeschwindigkeit des Elektrolyten: 0,1 - 6 m/s;
- Durchlauf-/Behandlungsdauer in der Elektrolytzelle: 2 - 6 min.

Im Anschluss an die elektrolytische Beschichtung wird das dann in erfindungsgemäßer Weise beschichtete Stahlflachprodukt zweistufig mit Wasser und vollentsalztem Wasser bei 40 °C gespült. Danach durchläuft die das Stahlflachprodukt eine Trocknungsstrecke mit Umluftgebläse mit einer Umlufttemperatur von 75 °C.

Optimale Arbeitsergebnisse ergeben sich bei den oben genannten Beispielen, wenn die Platinen- bzw. Bauteiltemperatur in an sich bekannter Weise maximal 920 °C, insbesondere 830 - 905 °C, beträgt. Dies gilt insbesondere dann, wenn das Formen des Stahlbauteils als Warmumformung im Anschluss an die Erwärmung auf die Platinen- bzw. Bauteiltemperatur so durchgeführt wird, dass die erwärmte Platine ("direktes" Verfahren) bzw. das erwärmte Stahlbauteil ("indirektes" Verfahren) unter Inkaufnahme eines gewissen Temperaturverlustes in das jeweils anschließend genutzte Formwerkzeug gelegt wird. Besonders betriebssicher lässt sich die jeweils abschließende Warmumformung dann durchführen, wenn die Platinen- bzw. Bauteiltemperatur 850 - 880 °C beträgt.

Die Erwärmung auf die Platinen- bzw. Bauteiltemperatur kann in an sich bekannter Weise im Durchlauf in einem Durchlaufofen erfolgen. Typische Glühzeiten liegen dabei im Bereich von 3 - 15 min. Alternativ ist es jedoch auch möglich, die Erwärmung mittels einer induktiv oder konduktiv arbeitenden Erwärmungseinrichtung vorzunehmen. Dies erlaubt eine besonders schnelle und genaue Erwärmung auf die jeweils vorgegebene Temperatur.

Während der Erwärmung sollte der Sauerstoffgehalt in der Ofenatmosphäre zwischen 15% und 25%, vorzugsweise 19% und 21% betragen. Eine weitere Optimierung zur Reduzierung der Wasserstoffaufnahme des erfindungsgemäß beschichteten Stahlsubstrats kann durch Einleitung von trockenen Gasen, vorzugsweise getrockneter Luft erfolgen. Hierdurch wird die Ofenatmosphäre künstlich zu einem niedrigen Taupunkt geführt.

Die vorliegende Erfindung bietet somit folgende Vorteile:
- Unerwünschte Beschichtungsbestandteile, wie z.B. sauerstoffaffine Elemente, insbesondere Aluminium, können bei dem erfindungsgemäßen Konzept ausgeschlossen werden;
- Aufbringung einer reinen Zinkschicht;
- Eine Grenzschicht (intermetallischen Phase), wie sie sich im Feuerbeschichtungsprozess ausbildet, wird weitestgehend unterbunden;
- Verhinderung einer Verzunderung des Grundwerkstoffes bei dessen Erwärmung;
- Es lässt sich eine gleichmäßigere Schichtdicke als beim Feuerbeschichtungsprozess erzielen;
- Es lassen sich sehr geringe Zinkschichtdicken aufbringen, wodurch eine Verflüssigung von Zink beim Warmumformen und damit die Neigung zur Rissbildung reduziert wird;
- Es lässt sich auf einfache Weise eine nur einseitige Beschichtung sowie eine beidseitige Beschichtung mit unterschiedlicher Schichtdicke je Materialseite realisieren;
- Möglichkeit der bedarfsgerechten Auslegung des gewünschten Korrosionsschutzwirkung (von keiner Korrosionsschutzwirkung bis hin zum aktiven Korrosionsschutz)
- Es ergeben sich reduzierte Reibwerte bei der direkten Warmumformung mit besserer Umformbarkeit;
- Die geringe Zinkschichtdicke ermöglicht den Einsatz schneller Aufheizverfahren, insbesondere für eine partielle Wärmebehandlung bzw. partielle Presshärtung;
- Aufgrund sehr kurzer Diffusionswege ist eine Teildiffusion von Eisen in die Zinkschicht möglich;
- Es ergibt sich eine gute Kaltumformbarkeit für teilweise indirekte Warmumformprozesse bzw. vollständig indirekte Warmumformprozesse;
- Gute Eignung für sogenannte Tailored Welded Blanks, da die Zinkbeschichtung im Vergleich zu einer AlSi-Beschichtung im Schweißnahtbereich nicht entfernt werden muss;
- Keine Notwendigkeit einer Schutzgasatmosphäre bei der Erwärmung des beschichteten Stahlflachproduktes, eine Oxidbildung ist akzeptabel;
- Gute Lackierbarkeit mit und ohne vorherigem Strahlprozess;
- Mögliche Einsparung von Korrosionsschutzöl für den Bauteilversand.

## Patentansprüche

1. Verfahren zum Herstellen eines mit einem metallischen, vor Korrosion schützenden Überzug versehenen Stahlbauteils, umfassend folgende Arbeitsschritte:
a) Zurverfügungstellen eines Stahlflachprodukts aus im Warmumformprozess durch Abschrecken härtbarem Stahlwerkstoff, der eine Streckgrenze von 150 - 1100 MPa und eine Zugfestigkeit von 300 - 1200 MPa aufweist,
b) Elektrolytisches Beschichten des Stahlflachprodukts mit einem Korrosionsschutzüberzug aus Zink, der außer Zink lediglich unvermeidbare Verunreinigungen enthält, wobei das Beschichten in einer Weise ausgeführt wird, dass der elektrolytisch abgeschiedene Korrosionsschutzüberzug eine mittlere Schichtdicke kleiner 5 µm, vorzugsweise im Bereich von 1 - 4 µm, besonders bevorzugt im Bereich von 2 - 4 µm aufweist,
c) Erwärmen einer aus dem beschichteten Stahlflachprodukt gebildeten Platine auf eine mindestens 800°C betragende Platinentemperatur;
d) Formen des Stahlbauteils aus der erwärmten Platine in einem Formwerkzeug, und
e) Härten des Stahlbauteils durch Abkühlen von einer Temperatur, bei der sich das Stahlbauteil in einem für die Ausbildung von Vergütungs- oder Härtegefüge geeigneten Zustand befindet, mit einer Abkühlrate, die zur Ausbildung des Vergütungs- oder Härtegefüges ausreicht,
**dadurch gekennzeichnet, dass** die aus dem beschichteten Stahlflachprodukt gebildete Platine im ungeglühten Zustand vor dem Formen des Stahlbauteils auf die besagte Platinentemperatur erwärmt wird.

2. Verfahren zum Herstellen eines mit einem metallischen, vor Korrosion schützenden Überzug versehenen Stahlbauteils, umfassend folgende Arbeitsschritte:
a) Zurverfügungstellen eines Stahlflachprodukts, das aus einem im Warmumformprozess durch Abschrecken härtbaren Stahlwerkstoff erzeugt ist, der eine Streckgrenze von 150 - 1100 MPa und eine Zugfestigkeit von 300 - 1200 MPa aufweist;
b) Elektrolytisches Beschichten des Stahlflachprodukts mit einem Korrosionsschutzüberzug aus Zink, der außer Zink lediglich unvermeidbare Verunreinigungen enthält, wobei das Beschichten in einer Weise ausgeführt wird, dass der elektrolytisch abgeschiedene Korrosionsschutzüberzug eine mittlere Schichtdicke kleiner 5 µm, vorzugsweise im Bereich von 1 - 4 µm, besonders bevorzugt im Bereich von 2 - 4 µm aufweist; und
c) Formen des Stahlbauteils aus einer aus dem Stahlflachprodukt gebildeten Platine in einem Formwerkzeug,
**gekennzeichnet durch** die weiteren Arbeitsschritte:
d) Erwärmen des Stahlbauteils auf eine mindestens 800°C betragende Bauteiltemperatur; und
e) Härten des Stahlbauteils durch Abkühlen von einer Temperatur, bei der sich das Stahlbauteil in einem für die Ausbildung von Vergütungs- oder Härtegefüge geeigneten Zustand befindet, mit einer Abkühlrate, die zur Ausbildung des Vergütungs- oder Härtegefüges ausreicht,
wobei die aus dem beschichteten Stahlflachprodukt gebildete Platine im ungeglühten Zustand in das Stahlbauteil geformt wird.

3. Verfahren nach Anspruch 2, **dadurch gekennzeichnet, dass** das Formen des Stahlbauteils (Arbeitsschritt c)) als Vorformen ausgeführt wird und dass das Stahlbauteil nach dem Erwärmen (Arbeitsschritt d)) fertig geformt wird.

4. Verfahren nach einem der voranstehenden Ansprüche, **dadurch gekennzeichnet, dass** das elektrolytische Beschichten in einer Weise ausgeführt wird, dass der Korrosionsschutzüberzug mit unterschiedlicher Schichtdicke je Stahlflachproduktseite aufgebracht wird.

5. Verfahren nach einem der Ansprüche 1 bis 3, **dadurch gekennzeichnet, dass** der Korrosionsschutzüberzug nur auf eine Seite des Stahlflachprodukts aufgebracht wird.

6. Verfahren nach einem der voranstehenden Ansprüche, **dadurch gekennzeichnet, dass** das Erwärmen der Platine oder des Stahlbauteils in einer Ofenatmosphäre durchgeführt wird, die zwischen 5 Vol.-% und 25 Vol.-% Sauerstoff, vorzugsweise zwischen 15 Vol.-% und 22 Vol.-% Sauerstoff enthält.

7. Verfahren nach einem der voranstehenden Ansprüche, **dadurch gekennzeichnet, dass** das Erwärmen der Platine oder des Stahlbauteils in einer getrocknetes Gas, vorzugsweise getrocknete Luft enthaltenden Ofenatmosphäre durchgeführt wird.

8. Verfahren nach einem der voranstehenden Ansprüche, **dadurch gekennzeichnet, dass** das Erwärmen der Platine oder des Stahlbauteils eine partiell unterschiedliche Wärmebehandlung der Platine oder des Stahlbauteils umfasst oder ist.

9. Verfahren nach Anspruch 8, **dadurch gekennzeichnet, dass** die partielle Wärmebehandlung der Platine oder des Stahlbauteils mittels induktiver oder laserunterstützter Erwärmung erfolgt.

10. Verfahren nach einem der voranstehenden Ansprüche, **dadurch gekennzeichnet, dass** das zur Verfügung gestellte Stahlflachprodukt ein rekristallisierendes Kaltband ist.

## Claims

1. Method for producing a steel component provided with an anti-corrosive metal coating comprising the following steps:
a) providing a flat steel product from steel material which is quench-hardenable by means of a hot forming process and having a yield strength of 150 - 1100 MPa and a tensile strength of 300 - 1200 MPa;
b) electrolytic coating of the flat steel product with an anti-corrosive zinc coating, which only contains unavoidable impurities apart from zinc, wherein the coating is executed in such a way that the electro-deposited anti-corrosive zinc coating has an average layer thickness of less than 5 µm, preferably in the range of 1 - 4 µm, particularly preferably in the range of 2 - 4 µm,
c) heating a plate formed from the coated flat steel product to a plate temperature of at least 800°C;
d) forming the steel component from the heated plate in a forming tool, and
e) hardening the steel component by cooling from a temperature at which the steel component is in a condition suitable for the formation of a tempered or hardened structure, at a cooling rate that is sufficient to form the tempered or hardened structure,
**characterised in that** the plate formed from the coated flat steel product is heated to the said plate temperature in the unannealed state before forming the steel component.

2. Method for producing a steel component provided with an anti-corrosive metal coating comprising the following steps:
a) providing a flat steel product produced by means of a hot forming process of quench-hardenable steel material having a yield strength of 150 - 1100 MPa and a tensile strength of 300 - 1200 MPa;
b) electrolytic coating of the flat steel product with an anti-corrosive zinc coating containing only unavoidable impurities apart from zinc, wherein the coating is executed in such a way that the electro-deposited anti-corrosive coating has an average layer thickness of less than 5 µm, preferably in the range of 1 - 4 µm, more preferably in the range of 2 - 4 µm; and
c) forming the steel component from a plate formed from the flat steel product in a forming tool,
**characterised by** the further steps of:
d) heating the steel component to a component temperature of at least 800°C; and
e) hardening of the steel component by cooling from a temperature at which the steel component is in a condition suitable for the formation of a tempered or hardened structure, at a cooling rate sufficient to form the tempered or hardened structure,
wherein the plate formed from the coated flat steel product is formed into the steel component in the unannealed state.

3. Method according to Claim 2, **characterised in that** the forming of the steel component (step c)) is executed as preforming and the steel component is finally formed after the heating (step d)).

4. Method according to any one of the preceding claims, **characterised in that** the electrolytic coating is executed in such a way that the anti-corrosive coating has a different layer thickness on each side of the flat steel product.

5. Method according to any one of the Claims 1 to 3, **characterised in that** the anti-corrosive coating is applied to only one side of the flat steel product.

6. Method according to any one of the preceding claims, **characterised in that** the heating of the plate or the steel component is carried out in a furnace atmosphere containing between 5 vol.-% and 25 vol.-% oxygen, preferably between 15 vol.-% and 22 vol.-% oxygen.

7. Method according to any one of the preceding claims, **characterised in that** the heating of the plate or the steel component is carried out in a dried gas, preferably dried air containing furnace atmosphere.

8. Method according to any one of the preceding claims, **characterised in that** the heating of the plate or the steel component involves or is a partially different heat treatment of the plate or the steel component.

9. Method according to Claim 8, **characterised in that** the partial heat treatment of the plate or the steel component takes place by means of inductive or laser-assisted heating.

10. Method according to any one of the preceding claims, **characterised in that** the flat steel product provided is a recrystallizing cold strip.

## Revendications

1. Procédé de fabrication d'un composant en acier, pourvu d'un revêtement métallique protégeant contre la corrosion, lequel comprend les étapes suivantes:
a) mise à disposition d'un produit en acier plat, fabriqué à partir d'un matériau en acier durcissable par refroidissement rapide dans le processus de formage à chaud, qui présente une limite d'étirage de 150 à 1100 MPa et une résistance à la traction de 300 à 1200 MPa,
b) revêtement électrolytique du produit en acier plat avec un revêtement de protection contre la corrosion en zinc, qui, outre le zinc, contient seulement des impuretés inévitables, sachant que le revêtement est exécuté de manière à ce que le revêtement protecteur contre la corrosion électrolytique présente une épaisseur de couche moyenne inférieure à 5 *µ*m, de préférence située dans un domaine de 1 à 4 *µ*m, en particulier, située préférentiellement dans un domaine de 2 à 4 *µ*m,
c) chauffage d'une platine, formée à partir du produit en acier plat, revêtu, à une température de platine d'au moins 800 °C,
d) formage, dans un outil de formage, du composant en acier, à partir de la platine chauffée,
e) durcissement du composant en acier par refroidissement à partir d'une température, à laquelle le composant en acier se trouve dans un état approprié à la formation d'une structure trempée et revenue ou durcie, avec un taux de refroidissement, suffisant pour la formation de la structure trempée et revenue ou durcie,
**caractérisé en ce que** la platine, formée à partir du produit en acier plat, revêtu, est, à l'état non porté au rouge, chauffée à ladite température de platine, avant le formage du composant en acier.

2. Procédé de fabrication d'un composant en acier, pourvu d'un revêtement métallique protégeant contre la corrosion, lequel comprend les étapes suivantes:
a) mise à disposition d'un produit en acier plat, fabriqué à partir d'un matériau en acier durcissable par refroidissement rapide dans le processus de formage à chaud, qui présente une limite d'étirage de 150 à 1100 MPa et une résistance à la traction de 300 à 1200 MPa,
b) revêtement électrolytique du produit en acier plat avec un revêtement de protection contre la corrosion en zinc, qui, outre le zinc, contient seulement des impuretés inévitables, sachant que le revêtement est exécuté de manière à ce que le revêtement protecteur contre la corrosion électrolytique présente une épaisseur de couche moyenne inférieure à 5 *µ*m, de préférence située dans un domaine de 1 à 4 *µ*m, situé en particulier, de préférence dans un domaine de 2 à 4 *µ*m,
c) formage, dans un outil de formage, du composant en acier, à partir d'une platine formée à partir du produit en acier plat,
**caractérisé par** les autres étapes suivantes:
d) chauffage du composant en acier à une température de composant d'au moins 800 °C,
e) durcissement du composant en acier par refroidissement à partir d'une température, à laquelle le composant en acier se trouve dans un état approprié à la formation d'une structure trempée et revenue ou durcie, avec un taux de refroidissement suffisant pour la formation de la structure trempée et revenue ou durcie, sachant que la platine, formée à partir du produit en acier plat, revêtu, est formée, à l'état non porté au rouge, dans le composant en acier.

3. Procédé selon la revendication 2,
**caractérisé en ce que** le formage du composant en acier (étape c) est exécuté en tant que préformage et que le composant en acier est fini formé, après le chauffage (étape d).

4. Procédé selon l'une des revendications précédentes, **caractérisé en ce que** le revêtement électrolytique est effectué de manière à ce que le revêtement de protection contre la corrosion soit appliqué en couche d'épaisseur différente sur chacun des côtés du produit en acier plat.

5. Procédé selon l'une des revendications 1 à 3, **caractérisé en ce que** le revêtement de protection contre la corrosion n'est appliqué que sur un côté du produit en acier plat.

6. Procédé selon l'une des revendications précédentes, **caractérisé en ce que** le chauffage de la platine ou du composant en acier est exécuté dans une atmosphère de four qui contient entre 5 % en volume et 25 % en volume d'oxygène, de préférence entre 15 % en volume et 22 % en volume d'oxygène.

7. Procédé selon l'une des revendications précédentes, **caractérisé en ce que** le chauffage de la platine ou du composant en acier est exécuté dans une atmosphère de four qui contient un gaz sec, de préférence de l'air sec.

8. Procédé selon l'une des revendications précédentes, **caractérisé en ce que** le chauffage de la platine ou du composant en acier comprend ou est un traitement à chaud partiellement différent de la platine ou du composant en acier.

9. Procédé selon la revendication 8,
**caractérisé en ce que** le traitement à chaud partiel de la platine ou du composant en acier est exécuté au moyen d'un chauffage inductif ou assisté par laser.

10. Procédé selon l'une des revendications précédentes, **caractérisé en ce que** le produit en acier plat mis à disposition est une bande à froid recristallisante.
